# EUROPEAN PATENT APPLICATION

(11) **EP 2 559 871 A1**
(43) Date of publication of application: **20.02.2013**
(21) Application number: 11768578.4
(22) Date of filing: 11.03.2011
(51) Int. Cl.: F01N 3/02, B01D 53/94, F01N 3/20, B01D 46/42

(54) **COMBUSTION/TEMPERATURE INCREASE CONTROL METHOD AND DEVICE FOR AFTER-TREATMENT BURNER SYSTEM**

(30) Priority: 12.04.2010 JP 2010091190
(71) Applicant: Hino Motors Ltd., Tokyo 191-8660 (JP)
(72) Inventor: MURAMATSU, Toshikatsu, Hino-shi Tokyo 191-8660 (JP)
(74) Representative: Köhler, Walter
(86) International application number: PCT/JP2011/001435
(87) International publication number: WO 2011/129051

(57) **Abstract**

Disclosed is a combustion/temperature increase control method for an after-treatment burner system with a burner 14 arranged upstream of a particulate filter 12 (exhaust gas purification member) incorporated in an exhaust pipe 11 to increase a temperature of the exhaust gas purification member by combustion with the burner 14. For temperature increase of the particulate filter 12 to a target temperature through ignition of the burner 14, fuel injection control of the burner 14 is effected such that a temperature increase rate of the particulate filter 12 is kept relatively high till approaching to a target temperature and is lowered stepwise after approaching to the target temperature.

## Description

### Technical Field

The present invention relates to a combustion/temperature increase control method and device for an after-treatment burner system.

### Background Art

In a conventional diesel engine, a particulate filter is incorporated in an exhaust pipe for flow of an exhaust gas to capture particulates (particulate matters) in the exhaust gas. However, the exhaust gas from the diesel engine in a normal operation status rarely has a chance to obtain a temperature level at which the particulates combust by themselves. Thus, an oxidation catalyst having active species such as Pt and Pd is integrally carried by the particulate filter.

Specifically, employment of such particulate filter carrying the oxidation catalyst accelerates an oxidation reaction of the captured particulates to lower an ignition temperature, so that the particulates can be removed by combustion even at an exhaust gas temperature lower than ever before.

However, even if such particulate filter is employed, an amount of captured particulates will exceed an amount of treated particulates in operation areas with low exhaust temperature levels. Continued operation with such low exhaust temperature levels may hinder sufficient regeneration of the particulate filter, resulting in excessive accumulation of the captured particulates in the particulate filter.

Thus, it has been conceived to additionally arrange a flow-through type oxidation catalyst in front of the particulate filter; with accumulation of the particulates becoming increased, fuel is added to the exhaust gas upstream of the oxidation catalyst to forcibly regenerate the particulate filter.

Specifically, fuel (HC) added upstream of the particulate filter undergoes the oxidation reaction during its passage through the frontward oxidation catalyst. The exhaust gas heated by heat of the reaction and flowing into the particulate filter just behind increases a catalyst bed temperature of the particulate filter to burn off the particulates, thereby regenerating the particulate filter.

However, in a vehicle such as a city shuttle-bus with travel pattern of traveling on congested roads for a long time, the frontward oxidation catalyst hardly has an elevated catalyst bed temperature enough for sufficient catalytic activity and thus an activated oxidation reaction of the added fuel in the oxidation catalyst, failing in effective regeneration of the particulate filter within a short time.

Thus, it has been studied in recent years to arrange a burner on an entry side of the particulate filter and burn off the captured particulates by combustion with the burner regardless of an operating status of the vehicle, thereby efficiently regenerating the particulate filter within a short time.

There exist the following Patent Literatures 1 and 2 as prior art document information relating to this kind of technique on exhaust gas purification catalyst or heating of exhaust gas by use of a burner.

### Citation List

### Patent Literature

[Patent Literature 1] JP 5-086845A
[Patent Literature 2] JP 6-167212A

### Summary of Invention

### Technical Problems

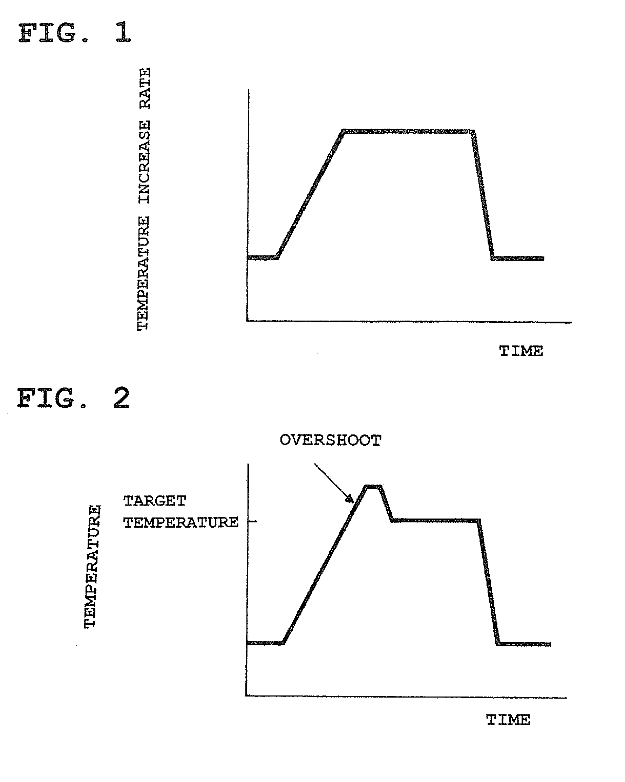

As plotted in Fig. 1, conventionally constant is a temperature increase rate at which a temperature of a particulate filter is increased from ignition of a burner to a target temperature. To enhance the temperature increase rate for quick reaching of the temperature of the particulate filter to the target temperature may cause, as plotted in Fig. 2, overshoot in temperature of the particulate filter near the target temperature into an excessive heating state over the target temperature, resulting in abnormal combustion of the particulates accumulated in the particulate filter.

The invention was made in view of the above and has its object to prevent an exhaust gas purification member such as a particulate filter from being excessively heated over a target temperature while minimizing a temperature increase or heat-up time.

### Solution to Problems

The invention is directed to a combustion/temperature increase control method for an after-treatment burner system with a burner arranged upstream of an exhaust gas purification member incorporated in an exhaust pipe to increase a temperature of the exhaust gas purification member by combustion with the burner, characterized in that, for temperature increase of the exhaust gas purification member to a target temperature through ignition of the burner, fuel injection control of the burner is performed such that a temperature increase rate of the exhaust gas purification member is kept relatively high until the temperature of the member approaches the target temperature and is lowered stepwise after the temperature thereof approaches the target temperature.

Thus, in this manner, the fuel injection control of the burner performed to keep relatively high the temperature increase rate of the exhaust gas purification member till the approaching of the temperature of the member to the target temperature contributes to substantial shortening of a temperature increase time at least initially after the ignition of the burner. In addition, the fuel injection control of the burner performed to lower stepwise the temperature increase rate after the approaching to the target temperature contributes to keeping the temperature of the exhaust gas purification member at the target temperature with no overshoot.

The invention is also directed to a combustion/temperature increase control device for an after-treatment burner system with a burner arranged upstream of an exhaust gas purification member incorporated in an exhaust pipe to increase a temperature of the exhaust gas purification member by combustion with the burner, characterized in that it comprises temperature detecting means for detecting the temperature of the exhaust gas purification member and a control device body for monitoring the temperature of the exhaust gas purification member on the basis of a detection signal from the temperature detecting means to increase the temperature of the exhaust gas purification member to a target temperature through ignition of the burner as needed and that it is configured to perform fuel injection control for the burner such that a temperature increase rate of the exhaust gas purification member is kept relatively high until the temperature of the member approaches the target temperature and is lowered stepwise after the temperature thereof approaches the target temperature.

### Advantageous Effects of Invention

According to the combustion/temperature increase control method and device for an after-treatment burner system of the invention described above, the fuel injection control of a burner performed to keep relatively high the temperature increase rate of the exhaust gas purification member till the approaching of the temperature of the member to the target temperature contributes to substantial shortening of a temperature rising time at least initially after the ignition of the burner. In addition, the fuel injection control of the burner performed to lower stepwise the temperature increase rate after the approaching to the target temperature contributes to keeping the temperature of the exhaust gas purification member at the target temperature with no overshoot. Thus, the invention can afford an excellent effect that the exhaust gas purification member is prevented from being excessively heated over the target temperature while minimizing the temperature increase time.

### Brief Description of Drawings

Fig. 1 is a graph showing a relationship between temperature increase rate and time in the conventional art;
Fig. 2 is a graph showing a relationship between temperature and time in the conventional art;
Fig. 3 is a schematic diagram showing an embodiment of the invention;
Fig. 4 is a graph showing a relationship between temperature increase rate and time in the embodiment; and
Fig. 5 is a graph showing a relationship between temperature and time in the embodiment.

### Description of Embodiments

An embodiment of the invention will be described with reference to the drawings.

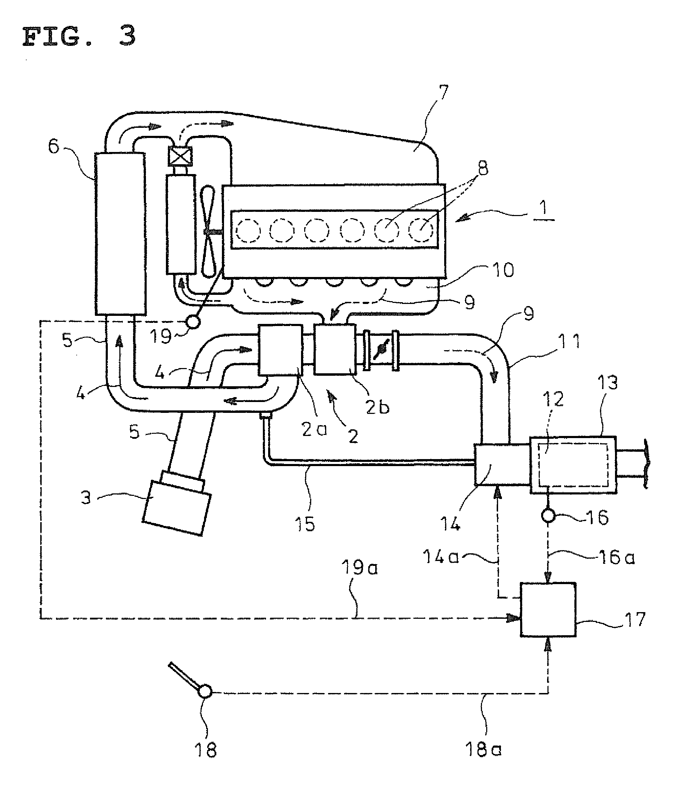

Figs. 3 to 5 show the embodiment of the invention. In Fig. 3, reference numeral 1 denotes a diesel engine with a turbocharger 2. Intake air 4 from an air cleaner 3 is sent through an intake pipe 5 to a compressor 2a of the turbocharger 2. The intake air 4 pressured with the compressor 2a is sent to an intercooler 6 where the air is cooled and is further guided to an intake manifold 7 where the air is distributed to each of cylinders 8 of the diesel engine (an in-line six-cylinder engine is illustrated in Fig. 3). An exhaust gas 9 discharged from each of the cylinders 8 of the diesel engine 1 is sent through an exhaust manifold 10 to a turbine 2b of the turbocharger 2. The exhaust gas having driven the turbine 2b is sent to an exhaust pipe 11.

Incorporated in the exhaust pipe 11 is a particulate filter 12 (an exhaust gas purification member) which integrally carries an oxidation catalyst and which is encased by a muffler 13. Arranged in front of the particulate filter 12 is a burner 14 which injects a proper amount of fuel and ignites and combusts the fuel. Though it is not shown, the burner 14 includes a fuel injection nozzle for injection of a proper amount of fuel and an ignition plug for ignition of the fuel injected through an injection port of the nozzle.

Connected to the burner 14 is a combustion air supply pipe 15 which is branched downstream from the compressor 2a of the turbocharger 2 such that a part of the intake air 4 supercharged by the compressor 2a is extracted and guided as combustion air.

The muffler 13 is equipped with a temperature sensor 16 (temperature detecting means) which detects a temperature of the particulate filter 12. The temperature of the particulate filter 12 detected by the sensor 16 is input to a control device body 17 as a detection signal 16a.

Though the direct detection of the temperature of the particulate filter 12 by the temperature sensor 16 is illustrated in the embodiment shown in Fig. 3, an alternative detection mode may be also applied in which a temperature of a nearest position on an entry side of the particulate filter 12 or both entry- and exit-side exhaust gas temperatures of the particulate filter 12 are detected to estimate the temperature of the particulate filter 12.

In the control device body 17, the temperature of the particulate filter 12 is monitored on the basis of the detection signal 16a from the temperature sensor 16 and, as needed, a control signal 14a is transmitted to ignite the burner 14 to heat the particulate filter 12 to a target temperature.

Also input to the control device body 17 are a load signal 18a from an accelerate sensor 18 (load sensor) which detects an stepping-on degree of an accelerator pedal as a load on the diesel engine 1 and a rotating speed signal 19a from a rotation sensor 19 which detects an engine rotating speed of the diesel engine 1. On the basis of a current operating status of the diesel engine 1 determined from the load signal 18a and the rotating speed signal 19a, a fundamental generated amount of particulates is estimated. The estimated fundamental generated amount is multiplied by modification coefficient determined in consideration of various conditions relating to generation of the particulates, and an amount of the treated particulates in the current operation status is subtracted from this to obtain a final generated amount, such final generated amounts being momentarily cumulated to estimate an accumulated amount of the particulates.

There may be various ways to estimate the accumulated amount of such particulates. Of course, any technique other than the estimation method exemplified herein may be used to estimate the accumulated amount of the particulates. For example, the accumulated amount of the particulates may be estimated on the basis of a difference in pressure upstream and downstream of the particulate filter 12 or estimated by using an operating time or a travel distance as an indicator.

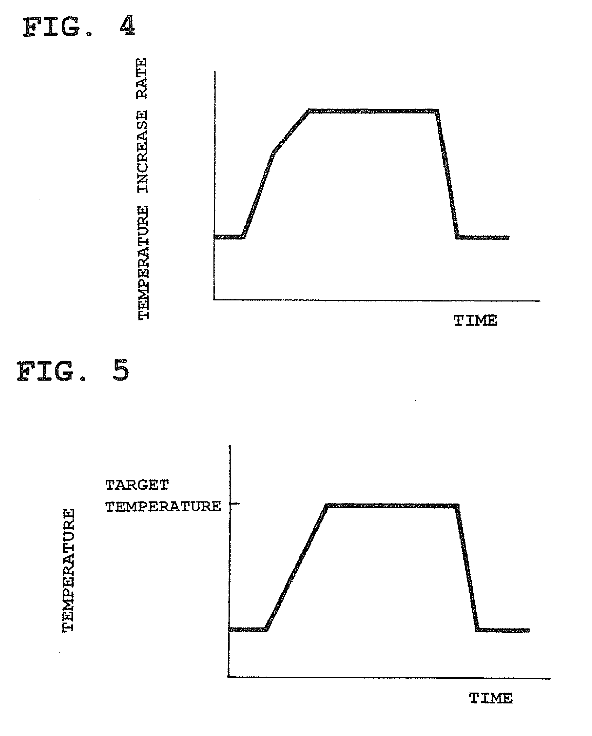

When the accumulated amount of the particulates is estimated to reach a predetermined amount, the control signal 14a is output to ignite the burner 14 so that the particulate filter 12 is heated to the target temperature. In this case, as plotted in Fig. 4, fuel injection of the burner 14 is controlled such that a temperature increase rate of the particulate filter 12 is kept at relatively high until the temperature approaches the target temperature and is lowered stepwise after approaching the target temperature.

Particularly in the example plotted in Fig. 4, a fuel injection amount of the burner 14 is controlled to be narrowed such that the temperature increase rate of the particulate filter 12 is lowered after the temperature of the particulate filter 12 approaches the target temperature. Of course, other than the two-step control of the temperature increase rate, the temperature increase rate may be controlled in three or more steps.

With the combustion/temperature increase control device for an after-treatment burner system thus constructed, the fuel injection control of the burner 14 performed to keep relatively high the temperature increase rate of the particulate filter 12 till the approaching of the temperature of the particulate filter to the target temperature contributes to substantial shortening of a temperature increase time at least initially after the ignition of the burner 14. In addition, the fuel injection control of the burner 14 performed to lower stepwise the temperature increase rate after the approaching to the target temperature contributes to keeping the temperature of the particulate filter 12 at the target temperature with no overshoot. Thus, the particulate filter 12 can be prevented from being excessively heated over the target temperature to avoid a risk of abnormal combustion of particulates accumulated on the particulate filter 12 while minimizing the temperature increase time from ignition of the burner to the attainment of the temperature of the particulate filter 12 to the target temperature.

It is to be understood that the combustion/temperature increase control method and device for an after-treatment burner system according to the invention are not limited to the embodiment described above. Though the description on the embodiment has been made with respect to a case where the exhaust gas purification member is a particulate filter, the after-treatment burner system according to the invention may also be applied to cases using various exhaust gas purification catalysts as exhaust gas purification members; the exhaust gas purification catalyst may be a selective reduction catalyst having a characteristic of selectively reacting NOₓ with a reducing agent even in the presence of oxygen or a NOₓ-occluded reduction catalyst having a characteristic of oxidizing NOₓ in an exhaust gas when an air/fuel ratio of the exhaust gas is lean to temporarily occlude NOₓ in the form of nitrate and dissolving and discharging NOₓ through the intervention of unburned HC, CO or the like to perform a reductional purification when an O₂ concentration in the exhaust gas is decreased. Specifically, the invention may be also similarly applied to an after-treatment burner system using a burner to increase the temperature of such exhaust gas purification catalyst in a cooling state to an activation temperature range. When the invention is applied to the after-treatment burner system, the exhaust gas purification catalyst can be prevented from being excessively heated over a target temperature; thus, heat deterioration or the like of the exhaust gas purification catalyst can be avoided.

### Reference Signs List

- 11: exhaust pipe
- 12: particulate filter (exhaust gas purification member)
- 14: burner
- 16: temperature sensor (temperature detecting means)
- 17: control device body

## Claims

1. A combustion/temperature increase control method for an after-treatment burner system with a burner arranged upstream of an exhaust gas purification member incorporated in an exhaust pipe to increase a temperature of the exhaust gas purification member by combustion with the burner, which comprises performing, for temperature increase of the exhaust gas purification member to a target temperature through ignition of the burner, fuel injection control of the burner such that a temperature increase rate of the exhaust gas purification member is kept relatively high until the temperature of the member approaches the target temperature and is lowered stepwise after the temperature thereof approaches the target temperature.

2. A combustion/temperature increase control device for an after-treatment burner system with a burner arranged upstream of an exhaust gas purification member incorporated in an exhaust pipe to increase a temperature of the exhaust gas purification member by combustion with the burner, which comprises temperature detecting means for detecting the temperature of the exhaust gas purification member and a control device body for monitoring the temperature of the exhaust gas purification member on the basis of a detection signal from the temperature detecting means to increase the temperature of the exhaust gas purification member to a target temperature through ignition of the burner as needed and which is adapted to perform fuel injection control for the burner such that a temperature increase rate of the exhaust gas purification member is kept relatively high until the temperature of the member approaches the target temperature and is lowered stepwise after the temperature thereof approaches the target temperature.
